(19) Europäisches Patentamt
European Patent Office
Office européen des brevets

(11) EP 0 728 414 B1

# (12) EUROPEAN PATENT SPECIFICATION

(45) Date of publication and mention
of the grant of the patent:
**04.11.1998 Bulletin 1998/45**

(51) Int. Cl.⁶: **A01N 43/80**, A01N 25/30

(21) Application number: 96300937.8

(22) Date of filing: **12.02.1996**

(54) **Microemulsion compositions of 3-isothiazolone compounds**

Mikroemulsionen von 3-Isothiazolonverbindungen

Microémulsions des dérivés des 3-isothiazolones

(84) Designated Contracting States:
**AT BE CH DE ES FR GB IE IT LI LU NL PT SE**

(30) Priority: **27.02.1995 US 395247**

(43) Date of publication of application:
**28.08.1996 Bulletin 1996/35**

(73) Proprietor:
**ROHM AND HAAS COMPANY**
**Philadelphia, Pennsylvania 19106-2399 (US)**

(72) Inventor: **Bing, Yu**
**Horsham, PA 19044 (US)**

(74) Representative:
**Angell, David Whilton et al**
**ROHM AND HAAS (UK) LTD.**
**European Operations Patent Department**
**Lennig House**
**2 Mason's Avenue**
**Croydon CR9 3NB (GB)**

(56) References cited:
EP-A- 0 302 701          EP-A- 0 476 943
EP-A- 0 648 414          US-A- 5 536 305

## Description

This invention relates to formulations of water-insoluble 3-isothiazolones having low volatile organic compound ("VOC") content.

Water-insoluble 3-isothiazolones, such as 2-n-octyl-3-isothiazolone, are usually formulated and sold commercially in an organic solvent. A 45% solution of 2-n-octyl-3-isothiazolone in propylene glycol has achieved much commercial success. However, the presence of the organic solvent can limit the use of the water-insoluble 3-isothiazolone in certain aqueous systems or in systems where the large amount of the organic solvent usually used can cause problems, such as in latices.

One way to formulate water-isoluble compounds so they are compatible with aqueous systems has been to use emulsions or microemulsions. Emulsions have large particles of non-uniform size. Emulsions also suffer from being thermodynamically unstable, in that they phase separate over time. This tendency to phase separate limits their usefulness. Microemulsions have certain advantages over emulsions in that the particle size is much smaller and uniform in size, and the microemulsions are much more stable toward phase separation, i.e., they are thermodynamically stable.

U.S. Pat. Application Serial Number 08/255,503 discloses microemulsions of organic wood preservative compounds having reduced leaching of the wood preservative compound from the treated wood. The suitable surfactants in that invention were one or more of sulfated anionics, sulfonated anionics, sulfosuccinated anionics, quaternary ammonium cationics, and amphoterics. Solvents for the wood preservative compound were required in that invention when the melting point of the wood preservative compound was greater than 25° C, but optional when the melting point was below 25° C. One of the wood preservative compounds in that invention was 2-n-octyl-3-isothiazolone. Non-ionic surfactants, such as ethoxylated castor oil, were demonstrated not to work in that invention.

One of the deficiencies of most prior microemulsions is that usually an organic solvent must be used. Such organic solvent contributes to the overall VOC content of certain products, such as latex paints. Goverment regulatory pressure is to reduce the total VOC content of such paints, making such prior microemulsions undesirable. Another deficiency of prior microemulsions is the high surfactant content necessary to achieve the microemulsion. Such a high surfactant content, usually up to 80%, may interfere with the system to be protected, and limits the amount of active ingredient which can be present in the composition. Yet another deficiency with prior microemulsions is that they are not always fully water dilutable. Often when water is added to prior microemulsions to further dilute them, the microemulsions may phase separate or gel. Such prior microemulsions have limited utility when a broad range of dilutions is desired.

It has now been found that up to 50% of 2-n-octyl-3-isothiazolone can be formulated without organic solvent to yield microemulsion concentrates having little or no water, which are fully water-dilutable to yield microemulsions having substantial amounts of water.

This is achieved by providing a composition essentially free of organic solvents and having low VOC content comprising (A) 2-n-octyl-3-isothiazolone as microbicidally active ingredient, (B) a surfactant system comprising (B1) an ethoxylated oil non-ionic surfactant and (B2) a sulfated or sulfonated oil anionic surfactant, the weight ratio of A:B being $\leq$ 50:50 and the weight ratio of B1:B2 being 20:80 to 70:30, optionally including 0 to 99.99% by weight water, said composition being in the form of a microemulsion concentrate or a microemulsion, said (A) being stable.

In another aspect, the invention comprises a method for inhibiting the growth of microbicidal organisms.

The term microbicide includes bactericides, fungicides, and algaecides. Microbial or biocidal activity is intended to include both the elimination of and inhibition of growth of microbial organisms, such as bacteria, fungi, and algae.

The surfactant system (B) is very important and comprises (B1) one or more non-ionic ethoxylated oil surfactants and (B2) one or more anionic sulfated or sulfonated oil surfactants.

Suitable ethoxylated oil non-ionic surfactants include, for example, ethoxylated lanolin oil and ethyoxylated castor oil. Ethoxylated castor oil is preferred.

Suitable sulfated or sulfonated oil anionic surfactants include, for example, sulfated or sulfonated synthetic sperm oil, sulfated or sulfonated vegetable fatty acids, sulfated or sulfonated animal oil, sulfated or sulfonated fats, such as red oil, and sulfated or sulfonated castor oil. Sulfated or sulfonated castor oil is preferred.

Preferred ratios of B1:B2 are from 25:75 to 60:40, more preferably, 45:55 to 55:45 by weight. Especially preferred is a ratio of 50:50 by weight.

The ratio of 2-n-octyl-3-isothiazolone (A) to surfactant system (B) may be any ratio from 1:99 to 50:50 by weight. Preferred ratios of A:B are from 10:90 to 50:50 by weight. More preferred are ratios of A:B of from 20:80 to 50:50 by weight.

The compositions of the invention may optionally contain up to 6% by weight adjuvants such as defoamers, antifreeze agents, stabilizers, thickeners, and the like. These adjuvants may be added to either the microemulsion concentrates or the microemulsions.

When defoamers are used, they are present in an amount of from 0.001% to 0.5 % by weight. Suitable defoamers include, for example, silicon based defoamers, such as Antifoamer™ 1430, available from the Dow Corning Co.

When antifreeze agents are used, they are present in an amount of from 0.001% to 6% by weight.

When stabilizers are used, they are present in an amount of from about 0.1% to about 5.5% by weight. Suitable stabilizers include, for example, inorganic or organic copper-based stabilizers, such as copper nitrate and copper octonoate.

The microemulsion concentrates of the invention are prepared by mixing the 2-n-octyl-3-isothiazolone, surfactant, and any optional ingredients, in any order. Microemulsions of the invention are prepared by diluting the microemulsion concentrates with a desired amount of water. The microemulsions can also be prepared directly by mixing 2-n-octyl-3-isothiazolone, surfactant, any optional ingredients, and the desired amount of water in any order.

When the compositions are in the form of a microemulsion, they remain a microemulsion at all levels of water dilution. The microemulsion compositions remain thermodynamically stable and clear, opalescent, or only slightly cloudy at all levels of water dilution up to 99.99%. A preferred amount of water is 60 to 85% by weight.

The microemulsion concentrates and microemulsions of the invention are useful in many areas of preservation, such as preservatives in paints, coatings, polymer latices, emulsions, lazures, stains, adhesives, caulks, textiles, leather and hide treatments, inks, textiles, non-woven fabrics, household laundry products, liquid and powder soaps, laundry sanitizers, cosmetics, toiletries, waxes and polishes, photographic rinses, metal working fluids, oilfield fluids, and many other applications where water and organic materials come in contact under conditions which allow the growth of undesired microorganisms.

It is known in the art that the performance of microbicides may be enhanced by combination with one or more other microbicides. Thus, other known microbicides may be combined advantageously with the compositions of this invention.

Example 1

Table 1 shows the composition of microemulsion concentrates and microemulsions used in the following examples. Samples 1 to 6, representing the invention, and comparative examples 12 to 22, were prepared by dissolving the active ingredient ("AI") in the desired surfactants to yield the microemulsion concentrates. Microemulsions 7 to 10, representative of the invention, were prepared directly by combining all the ingredients, including water.

The abbreviations used in the following Tables and Examples are as follows:

A. Active Ingredient

    A-1 = 2-n-octyl-3-isothiazolone
    A-2 = 2-n-octyl-3-isothiazolone/2-methyl-3-isothiazolone 1:1 by weight

B. Surfactant

    B1. Nonionic

        B1-1 = 100% ethoxylated (EO 30) castor oil (invention)
        B1-2 = 100% free aliphatic acid of a complex organic phosphate ester (comparative - not an ethoxylated oil)

    B2. Anionic

        B2-1 = 70% sulfated castor oil in aqueous solution (invention)
        B2-2 = calcium alkylaryl sulfonate (60%) (comparative - not oil)
        B2-3 = alkyl phenoxy ether sulfate, sodium salt (comparative - not a sulfated or sulfonated oil)
        B2-4 = sodium diamyl sulfosuccinate (comparative - not a sulfated or sulfonated oil)

C. Stabilizer

    S-1 = copper nitrate in water
    S-2 = 55% copper octonoate in mineral spirits

Table 1

| Microemulsion Concentrates ("MC") and Microemulsions | | | | | | |
|---|---|---|---|---|---|---|
| Sample | % A-1 | % A-2 | % Water | Stabilizer (%) | B1 (%) | B2 (%) |
| 1 | 40 | 0 | 0 | 0 | B1-1 (30) | B2-1 (30) |
| 2 | 50 | 0 | 0 | 0 | B1-1 (25) | B2-1 (25) |
| 3 | 25 | 25 | 0 | 0 | B1-1 (25) | B2-1 (25) |
| 4 | 20 | 20 | 0 | 0 | B1-1 (30) | B2-1 (30) |
| 5 | 50 | 0 | 2 | S1 (4) | B1-1 (22) | B2-1 (22) |
| 6 | 40 | 0 | 0 | S2 (8) | B1-1 (26) | B2-1 (26) |
| 7 | 8 | 0 | 84 | 0 | B1-1 (4) | B2-1 (4) |
| 8 | 8 | 0 | 72 | 0 | B1-1 (6) | B2-1 (14) |
| 9 | 8 | 0 | 76 | 0 | B1-1 (5.6) | B2-1 (10.4) |
| 10 | 8 | 0 | 68 | 0 | B1-1 (7.2) | B1-1 (16.8) |
| 11* | 60 | 0 | 0 | 0 | B1-1 (20) | B2-1 (20) |
| 12* | 40 | 0 | 0 | 0 | B1-2 (18) | B2-1 (42) |
| 13* | 40 | 0 | 0 | 0 | B1-2 (30) | B2-1 (30) |
| 14* | 40 | 0 | 0 | 0 | B1-1 (42) | B2-2 (18) |
| 15* | 40 | 0 | 0 | 0 | B1-1 (48) | B2-2 (12) |
| 16* | 40 | 0 | 0 | 0 | B1-1 (60) | - |
| 17* | 40 | 0 | 0 | 0 | B1-1 (36) | B2-2 (24) |
| 18* | 40 | 0 | 0 | 0 | B1-1 (38) | B2-2 (16) + B2-4 (6) |
| 19* | 40 | 0 | 0 | 0 | B1-1 (30) | B2-3 (30) |
| 20* | 40 | 0 | 0 | 0 | B1-1 (42) | B2-3 (18) |
| 21* | 40 | 0 | 0 | 0 | B1-1 (18) | B2-3 (42) |
| 22* | 40 | 0 | 0 | 0 | B1-1 (48) | B2-3 (12) |

*=Comparative

Example 2

The water dilutability of some of the microemulsion concentrates of Example 1 was determined by adding varying amounts of deionized water and evaluating sample clarity using a rating scale of 0-5. Sufficient water was added to the samples to form dilutions containing from 10 to 98% water by weight. The rating scale is defined as follows:

0 = perfectly clear;
1 = clear, very slight opalescence;
3 = opalescent, slightly cloudy;
4 = cloudy (macroemulsion); and
5 = phase separation.

A rating of 3 or lower is considered passing. These data are presented in Table 2.

4

Table 2

| Water Dilutability of MC Samples | | | | | | | | | | | | |
|---|---|---|---|---|---|---|---|---|---|---|---|---|
| Sample | Wt % Water | | | | | | | | | | | |
| | 0 | 10 | 20 | 30 | 40 | 50 | 60 | 70 | 80 | 90 | 95 | 98 |
| 1 | 0 | 0 | 0 | 0 | 0 | 0 | 2 | 1 | 0 | 0 | 0 | 0 |
| 2 | 0 | 0 | 0 | 0 | 0 | 0 | 2 | 2 | 0 | 0 | 0 | 0 |
| 3 | 0 | 0 | 0 | 0 | 0 | 0 | 1 | 1 | 0 | 0 | 0 | 0 |
| 4 | 0 | 0 | 0 | 0 | 0 | 0 | 2 | 1 | 0 | 0 | 0 | 0 |
| 11* | 0 | 0 | 5 | 5 | 5 | 5 | 4 | 3 | 0 | 1 | 1 | 1 |

\*=Comparative

From these data it can be seen that microemulsion concentrates containing less than 60% active ingredient are fully water dilutable at any dilution with water to form microemulsions.

Example 3

Two sets of microemulsion concentrate samples 1 to 4 were prepared. One set was stored in a freezer at 0° C for three months. The second set was stored in an oven at 55° C for one month. After storage, both sets of samples were examined visually for their physiacl stability. All samples, whether frozen or heated, remained clear and homogeneous with no phase separation. These samples showed good physical stability.

Example 4

The chemical stability of the active ingredient in microemulsion concentrate samples 1 and 2 was determined. Samples 1 and 2 were compared side by side with a sample of 45% 2-n-octyl-3-isothiazolone in propylene glycol, labeled Sample A. All three samples were stored in an oven at 55° C with aliquots of each sample taken at various time points. The aliquots were analyzed for the presence of 2-n-octyl-3-isothiazolone by reverse phase HPLC with UV detection. The results are reported in Table 3.

Table 3

| Weight % of 2-n-Octyl-3-isothiazolone Remaining After Storage | | | | | |
|---|---|---|---|---|---|
| Sample | Weeks of Storage at 55° C | | | | |
| | 0 | 1 | 2 | 3 | 4 |
| 1 | 100 | 98.6 | 96.9 | 91.1 | 88.1 |
| 2 | 100 | 98.8 | 96.1 | 94.1 | 92.0 |
| A* | 100 | 98.7 | 95.2 | 96.2 | 94.1 |

\*=Comparative

From the above data, it can be seen that the stability of 2-n-octyl-3-isothiazolone in the microemulsion concentrates is comparable to state of the art solvent, based formulations.

Example 5

Microemulsion concentrate samples 2, 5 and 6 were evaluated for use as paint film mildewcides. An unpreserved latex paint (Sample B) was used as a control.

Samples 2, 5, and 6 ("mildewcide") were added to an exterior latex paint at 100, 200, and 500 ppm AI concentrations. For each concentration of AI, triplicate wooden panels (100 x 75 x 5 mm) of unpreserved white pine (*Pinus monticola*) were painted with 2 coats of the paint. All surfaces of the panels were coated. With the panels in a horizontal position, they were spray inoculated with a mixed spore suspension at a concentration of approximately $10^6$ spores per gram of paint, and allowed to dry for 48 hours before being placed in a humidity cabinet (25° C and 85% relative humidity). The panels were visually examined and rated on a scale of 0 to 10 for fungal growth at 2 weeks and again at 4 weeks. A rating of 0 indicates 100% coverage of one panel face by the fungi and a rating of 10 indicates no fungal growth at all on the paint film. A rating greater than 7 is considered passing. These data are reported in Table 4.

The mixed spore suspension used in this test consisted of the following fungi:

| | |
|---|---|
| *Aspergillus niger* | ATCC 6275 |
| *Aureobasidium pullulans* | ATCC 12536 |
| *Cladosporium cladosporioides* | ATCC 16022 |
| *Penicillium purpurogenum* | ATCC 52427 |
| *Stachybotrys chartarum* | ATCC 16026 |

The formulation of the exterior latex paint used in this test was as follows:

| Materials | pounds/100 gallons | Parts per Hundred |
|---|---|---|
| Hydroxyethyl cellulose | 3.0 | 0.26 |
| Ethylene glycol | 25.0 | 2.65 |
| Water | 120.0 | 14.40 |
| Poly(methacrylic acid), 40% | 7.1 | 0.67 |
| Potassium tripolyphosphate | 1.5 | 0.07 |
| alkyl aryl polyether surfactant | 2.5 | 0.28 |
| Colloid 643 defoamer | 1.0 | 0.13 |
| Propylene glycol | 34.0 | 3.94 |
| Titanium dioxide | 225.0 | 6.57 |
| Minex 4 extender | 159.4 | 7.32 |
| Icecap K extender | 50.0 | 2.33 |
| Attagel 50 clay | 5.0 | 0.25 |

The above mixture is milled for 10 to 15 minutes in a Cowles Dissolver at 3800-4500 rpm and the following ingredients are then added at slower speed as follows:

| | | |
|---|---|---|
| Film forming acrylic copolymer | 305.9 | 34.10 |
| Colloid 643 defoamer | 3.0 | 0.39 |
| 2,2,4-trimethaylpentane-1,3-diol monoisobutyrate coalescent | 9.3 | 1.17 |
| Mildewcide | 2 to 7 | 0.25 - 1.00 |
| Ammonia, 28% | 2.0 | 0.27 |
| Water | Enough for 90 to 95 KU and to adjust to 100 gallons total | |
| Hydroxyethyl cellulose, 2.5% | | |
| | about $\overline{1162}$ | $\overline{100.00}$ |

The paint had a pigment volume content of 45.4%, a volume solids of 36.2%. an initial viscosity of 90 to 95 KU, and a pH of 9.5.

Table 4

| Mildewcide Resistance Rating of Paint Samples | | | |
|---|---|---|---|
| Samples | ppm AI | 2 Weeks | 4 Weeks |
| 2 | 100 | 10 | 10 |
| | 200 | 10 | 9.7 |
| | 500 | 10 | 9.7 |
| 5 | 100 | 9.7 | 8.7 |
| | 200 | 9.7 | 9.7 |
| | 500 | 10 | 9.3 |
| 6 | 100 | 10 | 8.7 |
| | 200 | 10 | 9.3 |
| | 500 | 10 | 10 |
| B * | 0 | 3 | 0.3 |

*=Comparative

The above reported results are the average rating of the three panels tested at each concentration of AI. Samples 2, 5, and 6 were able to protect the paint films from fungal growth at each concentration of AI.

Example 6

Samples 2, 5, and 6 were added to the exterior latex paint formulation described in Example 5 to provide a concentration of AI at 500 ppm. These samples, as well as a sample of B, an unpreserved latex described in Example 5, were heat aged for 2 weeks at 55° C. All samples were analyzed for AI content by reverse phase HPLC before and after heat aging. These results are reported in Table 5.

Table 5

| | ppm AI | | |
|---|---|---|---|
| Sample | Before Heat Aging | After Heat Aging | % AI Remaining |
| 2 | 482 | 492 | 102 |
| 5 | 568 | 634 | 112 |
| 6 | 453 | 423 | 93 |
| B* | 609 | 628 | 103 |

*=Comparative

From the above data, it can be seen that the stability of 2-n-octyl-3-isothiazolone in the paint dosed with any of the microemulsion concentrates is comparable to a that in a paint dosed with a current commercial, solvent based product.

Example 7

Water dilutability of microemulsion samples 7 to 10, representing the invention, was determined by adding water and observing clarity. Each of samples 7 to 10 remained perfectly clear microemulsions (a rating of 0 as described in Example 2) at all dilutions with water.

Example 8 - Comparative

Water dilutability of comparative microemulsion concentrate samples 12 through 22 was determined by the method of Example 7, but these comparative samples did not remain microemulsions in that upon dilution phase separation occurred.

**Claims**

1. A composition essentially free of organic solvents and having low VOC comprising (A) 2-n-octyl-3-isothiazolone as microbicidally active ingredient, (B) a surfactant system comprising (B1) an ethoxylated oil non-ionic surfactant and (B2) a sulfated or sulfonated oil anionic surfactant, the weight ratio of A:B being ≤ 50:50 and the weight ratio of B1:B2 being 20:80 to 70:30, optionally including 0 to 99.99% by weight water, said composition being in the form of a microemulsion concentrate or a microemulsion, said (A) being stable.

2. Composition according to claim 1 wherein said B1 is selected from the group consisting of ethoxylated castor oil and ethoxylated lanolin oil.

3. Composition according to claim 1 wherein B2 is selected from the group consisting of sulfated or sulfonated synthetic sperm oil, sulfated or sulfonated vegetable fatty acids, sulfated or sulfonated animal oil, sulfated or sulfonated fats, such as red oil, and sulfated or sulfonated castor oil.

4. Composition according to claim 1 further including up to 6% by weight defoamers, antifreeze agents, stabilizers, and thickeners.

5. Composition according to claim 1 further comprising one or more microbicidally active ingredients in addition to (A).

6. Composition according to claim 1 in the form of a microemulsion comprising 60 to 85% by weight water, wherein surfactant system (B) comprises (B1) ethoxylated castor oil, and (B2) sulfated castor oil, the weight ration of A:B being 20:80 to 50:50 and the weight ratio of B1:B2 being 25:75 to 60:40.

7. Method of protecting a locus from microbicidal attack comprising introducing in said locus a microbicidally effective amount of a composition according to claim 1.

8. Method according to claim 5 wherein said locus is paints, coatings, polymer latices, emulsions, lazures, stains, adhesives, caulks, textiles, leather and hide treatments, inks, textiles, non-woven fabrics, household laundry products, liquid and powder soaps, laundry sanitizers, cosmetics, toiletries, waxes and polishes, photographic rinses, metal working fluids, and oilfield fluids.

**Patentansprüche**

1. Zusammensetzung, die im wesentlichen keine organischen Lösemittel enthält und einen niedrigen Gehalt an flüchtigen organischen Bestandteilen (VOC) hat, enthaltend:

   (A) 2-n-Octyl-3-isothiazolon als mikrobiozidaktiven Bestandteil,
   (B) ein Tensidsystem enthaltend

      (B1) ein öliges ethoxyliertes nichtionisches Tensid und
      (B2) ein öliges sulfatiertes oder sulfoniertes anionisches Tensid,

   wobei das Gewichtsverhältnis von A:B ≤ 50:50 ist und das Gewichtsverhältnis von B1:B2 20:80 bis 70:30 beträgt, gegebenenfalls einschließlich 0-99,99 Gew.-% Wasser, wobei die Zusammensetzung in Form eines Mikroemulsionskonzentrats oder einer Mikroemulsion vorliegt und (A) stabil ist.

2. Zusammensetzung nach Anspruch 1, dadurch gekennzeichnet, daß B1 aus der aus ethoxyliertem Rizinusöl und ethoxyliertem Lanolinöl bestehenden Gruppe ausgewählt ist.

3. Zusammensetzung nach Anspruch 1, dadurch gekennzeichnet, daß B2 aus der aus sulfatiertem oder sulfoniertem synthetischen Spermöl, sulfatierten oder sulfonierten pflanzlichen Fettsäuren, sulfatiertem oder sulfoniertem tierischen Öl, sulfatierten oder sulfonierten Fetten, wie Red Oil, und sulfatiertem oder sulfoniertem Rizinusöl bestehenden Gruppe ausgewählt ist.

4. Zusammensetzung nach Anspruch 1, dadurch gekennzeichnet, daß sie zusätzlich bis zu 6 Gew.-% Entschäumer, Frostschutzmittel, Stabilisatoren und Verdickungsmittel enthält.

5. Zusammensetzung nach Anspruch 1, dadurch gekennzeichnet, daß sie zusätzlich zu (A) einen oder mehrere mikrobiozidaktive Bestandteile enthält.

6. Zusammensetzung nach Anspruch 1, dadurch gekennzeichnet, daß sie die Form einer 60-85 Gew.-% Wasser enthaltenden Mikroemulsion hat, in der das Tensidsystem (B) als (B1) ethoxyliertes Rizinusöl und als (B2) sulfatiertes Rizinusöl enthält, wobei das Gewichtsverhältnis von A:B 20:80 bis 50:50 und das Gewichtsverhältnis von B1:B2 25:75 bis 60:40 beträgt.

7. Verfahren zum Schützen eines Ortes gegen Angriff von Mikroorganismen durch Einbringen in den Ort einer mikrobiozidwirksamen Menge einer Zusammensetzung nach Anspruch 1.

8. Verfahren nach Anspruch 7, dadurch gekennzeichnet, daß der Ort Farben, Beschichtungen, Polymerlatizes, Emulsionen, Lasuren, Beizen, Klebstoffe, Dichtungsmassen, Textilien, Leder und Tierhautbehandlungsmittel, Druckfarben, Textilien, Vliese, Haushaltswaschmittel, flüssige und pulverförmige Seifen, Wäschedesinfektionsmittel, Kosmetika, Toilettenartikel, Wachse und Polituren, fotografische Spülmittel, Metallbearbeitungsflüssigkeiten und Ölbohrflüssigkeiten ist.

## Revendications

1. Composition pratiquement exempte de solvants organiques et ayant une faible teneur en COV, comprenant (A) de la 2-n-octyl-3-isothiazolone à titre d'ingrédient à activité microbicide, (B) un système tensioactif comprenant (B1) un tensioactif non-ionique huileux éthoxylé et (B2) un tensioactif anionique huileux sulfaté ou sulfoné, le rapport en poids A/B étant inférieur ou égal à 50/50 et le rapport en poids B1/B2 étant de 20/80 à 70/30, comprenant éventuellement 0 à 99,99 % en poids d'eau, ladite composition étant sous la forme d'un concentré de micro-émulsion ou d'une micro-émulsion, ledit composant (A) étant stable.

2. Composition selon la revendication 1, dans laquelle ledit composant B1 est choisi dans l'ensemble constitué par l'huile de ricin éthoxylée et l'huile de lanoline éthoxylée.

3. Composition selon la revendication 1, dans laquelle le composant B2 est choisi dans l'ensemble constitué par l'huile de spermaceti synthétique sulfatée ou sulfonée, les acides gras végétaux sulfatés ou sulfonés, les huiles animales sulfatées ou sulfonées les graisses sulfatées ou sulfonées, telles que l'huile rouge, et l'huile de ricin sulfatée ou sulfonée.

4. Composition selon la revendication 1, comprenant en outre jusqu'à 6 % en poids d'anti-moussants, d'agents antigels, de stabilisants, et d'épaississants.

5. Composition selon la revendication 1, comprenant en outre un ou plusieurs ingrédients à activité microbicide en plus du composant (A).

6. Composition selon la revendication 1, sous la forme d'une microémulsion comprenant 60 à 85 % en poids d'eau, dans laquelle le système tensioactif (B) comprend (B1) de l'huile de ricin éthoxylée et (B2) de l'huile de ricin sulfatée, le rapport en poids A/B étant de 20/80 à 50/50 et le rapport en poids B1/B2 étant de 25/75 à 60/40.

7. Procédé pour protéger un site vis-à-vis d'une attaque microbienne, comprenant l'introduction dans ledit site d'une quantité efficace, du point de vue microbicide, d'une composition selon la revendication 1.

8. Procédé selon la revendication 7, dans lequel ledit site est représenté par les peintures, les revêtements, les latex polymères, les émulsions, les lasures, les matières colorantes, les adhésifs, les calfatages, les textiles, les traitements pour cuirs et peaux, les encres, les textiles, les étoffes non-tissées, les produits domestiques pour le lavage du linge, les savons liquides et en poudre, les produits sanitaires pour le linge, les cosmétiques, les articles de toilette, les cires et les cirages, les rinçages photographiques, les fluides pour le travail des métaux, et les fluides utilisés sur les champs pétrolifères.